# EUROPEAN PATENT SPECIFICATION

(11) **EP 0 400 708 B1**
(45) Date of publication and mention of the grant of the patent: **15.12.1993**
(21) Application number: 90201257.4
(22) Date of filing: 17.05.1990
(51) Int. Cl.: B65D 77/24, A47G 21/04

(54) **Flat-foldable spoon**
Faltbarer Messlöffel
Cuillère-doseuse pliable

(30) Priority: 29.05.1989 NL 8901356
(43) Date of publication of application: 05.12.1990
(73) Proprietor: Thomassen & Drijver-Verblifa N.V., 7418 AH Deventer (NL)
(72) Inventor: Jongepier, Hans, NL-7423 GV Deventer (NL); Klijn, Theodorus, Adrianus, Maria,, NL-7544 DB Enschede (NL)
(74) Representative: Prins, Hendrik Willem

(56) References cited:
- DE-A- 3 521 289
- GB-A- 2 052 246
- NL-A- 8 601 653

## Description

The present invention relates to a packaging which consists of a holder with an opening which prior to use of the contents is closed with a removable tagger, and a cover which after removal of the tagger takes over the function of closing the holder opening and further protects the tagger against damage.

Such a packaging is often used for packaging material in particle form, particularly foodstuffs, such as coffee milk, powdered soup and the like.

The packaging can consist of a metal holder, a glass holder, a plastic holder and the like.

Since the packaged contents are usually used in determined measured amounts, a measuring spoon is often supplied with this packaging. To ensure as far as possible that a packaging with a measuring spoon is ultimately supplied to the consumer, the measuring spoon is often arranged in the holder. This means that after breaking open the packaging the measuring spoon is buried under the contents of the packaging and is only found after the consumer has rummaged through the contents.

GB-A-2 052 246 discloses a spoon comprising a handle and a spoon portion, which curved spoon portion is formed by folding a handle forming sheet along folding lines. The preamble of claim 1 is based on GB-A-2 052 246.

Many attempts have been made to incorporate the measuring spoon in the packaging such that it is directly available to the consumer when the packaging is broken open.

The present invention has for its object to incorporate the measuring spoon in the packaging in an entirely different manner, and this in the space lying between the cover and the tagger. When the contents of the packaging are broken open the measuring spoon is thus directly available to the consumer before the tagger is removed. The measuring spoon cannot however be readily arranged into this disc-shaped space, because the scoop portion in particular of the measuring spoon has to have a relatively large capacity (about 10-100 ml) so that the scoop portion is of too large dimensions to be arranged in this disc-shaped space.

The invention is based on the insight that, despite the small space that is present between the tagger and the cover, a measuring spoon can nevertheless be arranged therein, without providing the tagger or the cover with bulges, by making use of a folding scoop portion which, after folding is coupled to and carried by a carrier ring which is connected to a handle.

The flat folding measuring spoon according to the invention is therefore characterized in that the spoon portion comprises a carrier ring intended for accomodating the scoop portion.

A packaging according to the invention is characterized by a folded measuring spoon which resides in the space between the cover and the tagger.

In order to avoid the measuring spoon damaging or breaking through the tagger, it is recommended that the handle with the carrier ring spans the opening and supports on an opening rim via the tagger. This opening rim can be an edge of a cover ring, or a neck edge of a glass holder. Any forces exerted by the flat-folded scoop portion are sustained via the handle and the carrier ring on the opening rim, so that the tagger cannot be penetrated there.

A particularly favorable measuring spoon, which does not have the problem of components thereof disappearing, results when the handle, the carrier ring and the scoop portion are preferably manufactured from one piece.

A very convenient packaging results if the measuring spoon is fixed in the cover. It is thus possible for the supplier of the packaging to arrange the tagger and the cover, wherein the measuring spoon is already incorporated, onto the bottomless holder with existing apparatus. The filler finally carries out the filling and subsequently arranges the bottom. Such a cover with measuring spoon can be manufactured in only a small number of manufacturing operations, for example injection molding operations, if the cover and the handle with the carrier ring are manufactured from one piece. Only one manufacturing operation is necessary if, as preferred, the cover and the measuring spoon are manufactured from one piece.

A most advantageous embodiment of the folding measuring spoon according to the invention results if in preference the scoop portion is a circle segment-shaped strip of material which can be folded to form a cone. If a recess is arranged in the strip of material at the point of the centre of the circle, the cone can easily be formed by folding, while the hole created in the measuring spoon in the apex angle of the cone allows substantially no material through because of the mutual material cohesion, while emptying material from the measuring scoop is facilitated.

The folded form of the measuring scoop can be locked if along the curved peripheral edge of the strip of material at least one protruding edge portion is preferably arranged which, after forming of the strip of material into a cone, can be hooked behind the carrier ring. This is important if the measuring scoop in the folded form is manufactured for instance by injection molding, because material stress results in the flat-folded form, which is removed when the measuring spoon form is assumed. In this way the forming of the measuring spoon from the flat-folded form is easy and substantially self-explanatory.

According to another embodiment the scoop portion comprises a scoop portion bottom having peripheral wall parts connected thereto via folding edges. With this other measuring spoon, handle with carrier ring and scoop portion are inseparably connected if in preference one peripheral wall part is connected to the carrier ring. The measuring spoon form can also be locked in this case if at least one peripheral wall part is preferably provided with a protruding edge portion hookable behind the carrier ring. A very advantageous form, which is recognizable to the consumer and is easily folded into the measuring spoon, results if the peripheral wall parts in the flat-folded form preferably protrude radially in a star shape.

Another embodiment of the packaging according to the invention has a measuring spoon in which the scoop portion comprises a bottom part and optionally at least one intermediate clamp part, which are mutually clamped via a peripheral edge during forming of the scoop portion. In this case the measuring spoon results from so-called clamping nesting of the bottom part and any intermediate clamp parts in each other and in the peripheral edge of the carrier ring. The bottom, the intermediate clamp part and the carrier ring are preferably connected mutually via flexible strips, whereby all the components of the measuring spoon are non-losably connected to each other.

According to another embodiment of the packaging according to the invention a measuring spoon is used in which the scoop portion comprises a foil attached to the carrier ring and means for forming the foil to the scoop portion. In this case the scoop portion is formed by a foil for shaping which is brought into and kept in the form of the scoop portion. In a first variant these forming means comprise brackets of memory metal fixed to the carrier ring. According to a second variant the forming means comprise a scoop portion bottom and at least one strip coupling the scoop portion bottom to the carrier ring. In a favorable variant the foil is arranged between the carrier ring and the scoop portion bottom, and the scoop portion bottom can be arranged in the carrier ring, whereby a measuring scoop results with a scoop portion bottom that can sag downward.

With a further variant an equivalent of a tea strainer can be used as measuring scoop, because when there are many materials to be measured out the mutual cohesion is such that the material cannot leave the measuring scoop through small openings. This variant comprises a scoop portion with a braiding of strips of material which are connected to the carrier ring.

Another variant with a sagging bottom results if the scoop portion comprises a bottom which is connected to the carrier ring via a peripheral edge, wherein a large number of slits are arranged lying transversely of the carrier ring, whereby flexible peripheral wall strips are formed.

The invention not only relates to the measuring spoon and the packaging with a folding measuring scoop according to the invention, but also to a cover wherein this measuring spoon is fixed, for instance by glueing, or by moulding in a simultaneous manufacturing operation, such as for instance by injection molding.

Mentioned and other characteristics of the packaging, measuring spoon and cover according to the invention will become apparent and be further elucidated in the light of the description of a number of embodiments, with reference to the annexed drawings. In the drawings:
Figure 1 shows an exploded. partially broken away, perspective view of a first packaging according to the invention;
figures 2, 3 and 4 show on an enlarged scale the measuring spoon used in the embodiment of figure 1, respectively in folded state, folded to measuring spoon and preferred state when manufactured;
figure 5 shows on a different scale a view into a cover in which the measuring spoon according to fig. 2-4 is non-losably but releasably attached in an injection molding process;
figures 6 and 7 show another variant of the folding measuring spoon in the manufactured state and in the folded state;
figure 8 shows a view corresponding with figure 1 of another packaging;
figure 9 shows the folded measuring spoon from figure 8;
figures 10 and 11 show another variant of the measuring spoon in folded and ready for use position;
figure 12 shows a view corresponding with figure 5 of a cover with measuring spoon;
figure 13 shows the measuring spoon from figure 12 in position of use;
figures 14 and 15 show another measuring spoon in folded and ready for use position;
figure 16 shows an exploded view of another variant of the measuring spoon according to the invention;
figure 17 shows a perspective, partially broken away view of a measuring spoon according to the invention;
figures 18-21 show other embodiments of the folded measuring spoon according to the invention for use in a cover or packaging according to the invention.

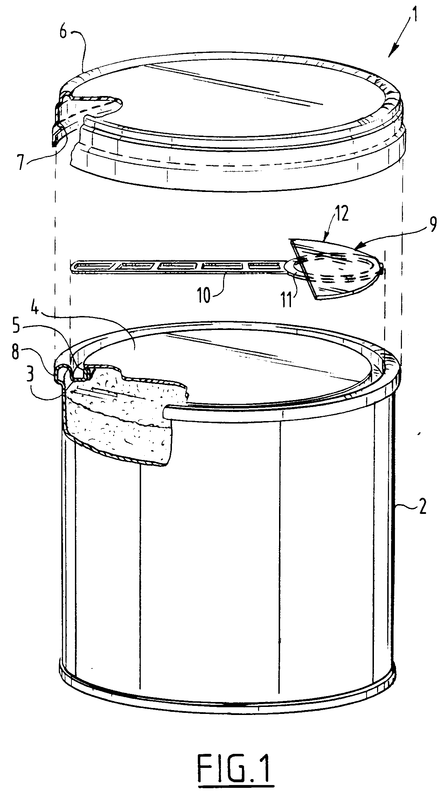

Figure 1 shows a packaging 1 according to the invention which comprises a cylindrical, metal holder 2 with an end opening 3 which is closed off with an aluminium tagger 4 that is a conventional tagger. This tagger rests on a holder rim 5 bent round towards the inside. The tagger 4 and after removal the opening 3 can be closed with a plastic cover 6, which can be arranged closing over the holder 2, wherein an internal peripheral edge 7 of the cover 6 snaps over an external rim 8 of the holder.

Arranged in the disc-shaped space between the cover 6 and the tagger 4 is a folded measuring spoon 9 according to the invention. This measuring spoon 9 comprises a stiff handle 10 with a carrier ring 11 and a scoop portion 12 folded out thereon. This scoop portion 12 is folded such that it lies between the cover and the handle 10 with carrier ring 11, which support on the holder rim 5. Damage to the tagger 4 is thus avoided, even when the folded scoop portion is under shaping bias.

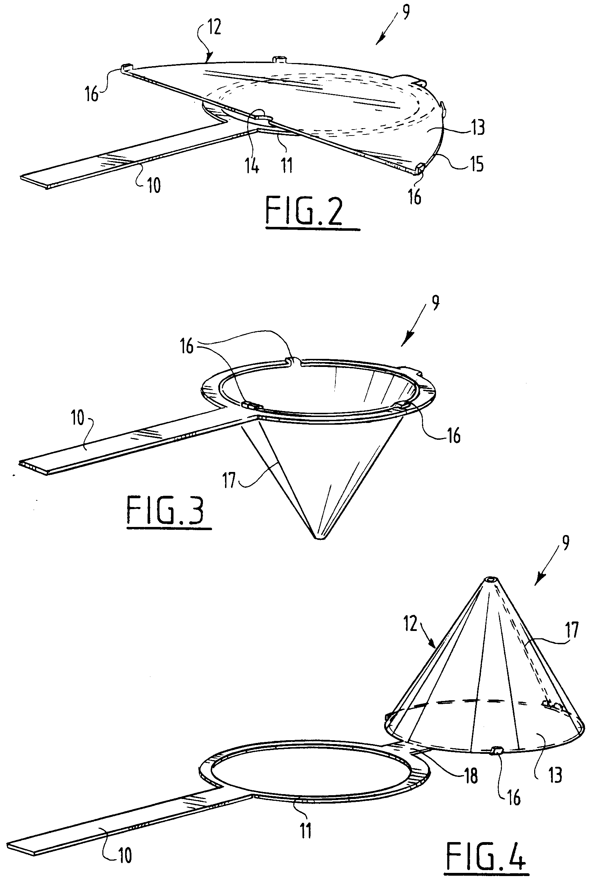

The construction and manufacture of the measuring spoon 9 is shown in more detail in figures 2-4. The scoop portion 12 comprises a circle segment-shaped strip of material 13 with a recess 14 at the point of an imaginary centre point. Forming into a conical scoop portion 12 is thus made easier. Finally, protruding edge portions 16 are arranged along the curved peripheral edge of the strip of material 13, which, after folding to the measuring scoop, hook onto the carrier ring 11.

Folding takes place by pressing the strip of material 13 from the position in figure 2 through the carrier ring 11 into the position shown in figure 3. Thus resulting is a measuring spoon 9 with a capacity of 5-20 ml.

In order to facilitate manufacture of the measuring spoon, it can be manufactured for instance by means of injection molding in the state which is shown in figure 4. The handle 10, the carrier ring 11 and the conically shaped strip of material 13 with its lengthwise slit 17, are manufactured in one piece and mutually connected via the strip 18.

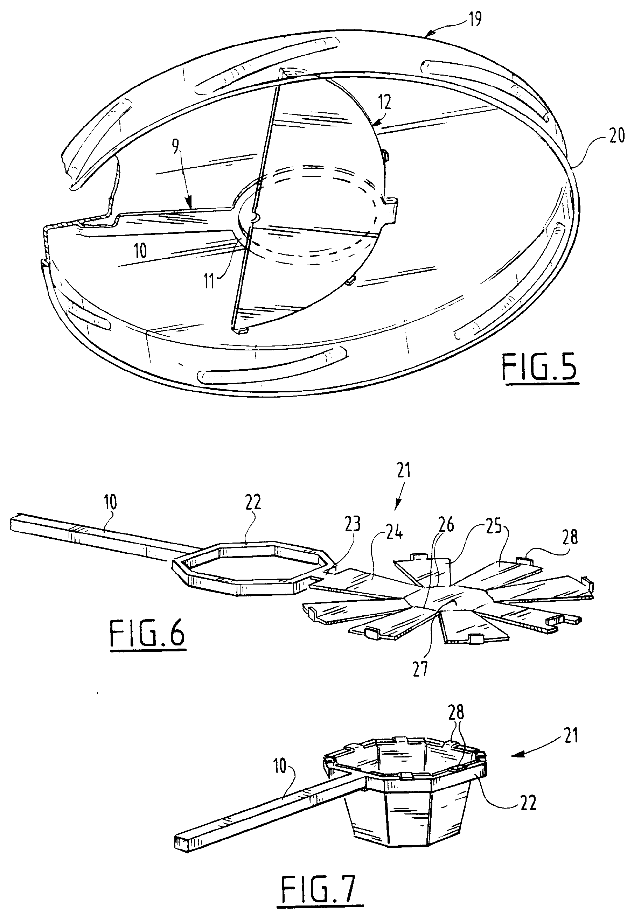

Figure 5 shows a variant wherein the measuring spoon 9 forms one entity with the cover 19, in this case a screw cover. Here, the measuring spoon 9 lies in folded state wholly within the space which is enclosed by the cover rim 20.

Figures 6 and 7 show a measuring spoon 21 according to the invention. In this case the polygonal carrier ring 22 is connected via a strip 23 to one of the peripheral wall parts 24, 25 which are connected to a scoop portion bottom 27 via straight folding edges 26, which are required for tension-free folding. The peripheral wall parts 25 are each provided with a protruding edge portion 28 which hooks onto the carrier ring 22 after the measuring spoon according to figure 7 has been formed.

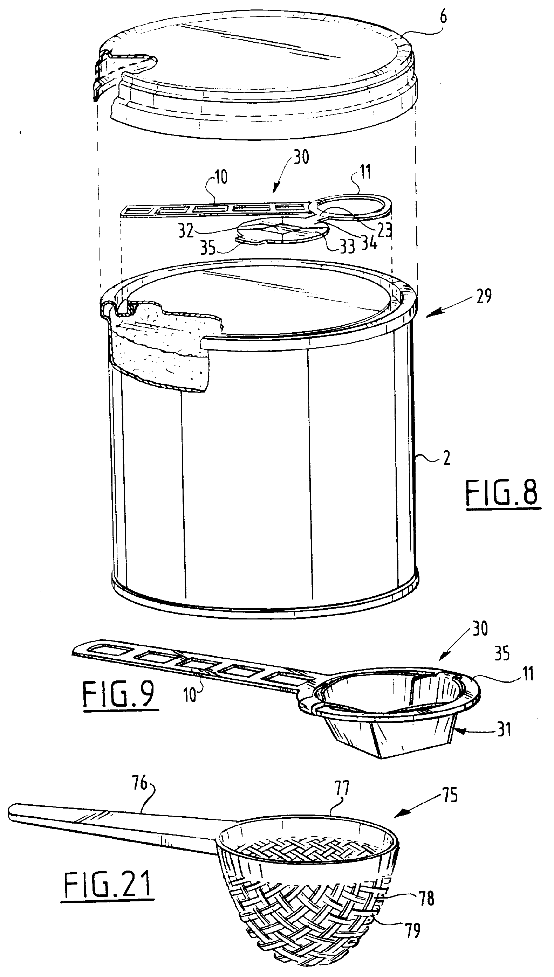

Figures 8 and 9 show another packaging 29 according to the invention with a folding measuring spoon 30. In contrast with the measuring spoon 21 from figures 6 and 7, the scoop portion 31 comprises a square scoop portion bottom 32 and four peripheral wall parts 34, whereof the part 34 is connected via the strip 23 to the circular carrier ring 11. The scoop portion 31 hooks onto the carrier ring 11 with a protruding edge portion 35.

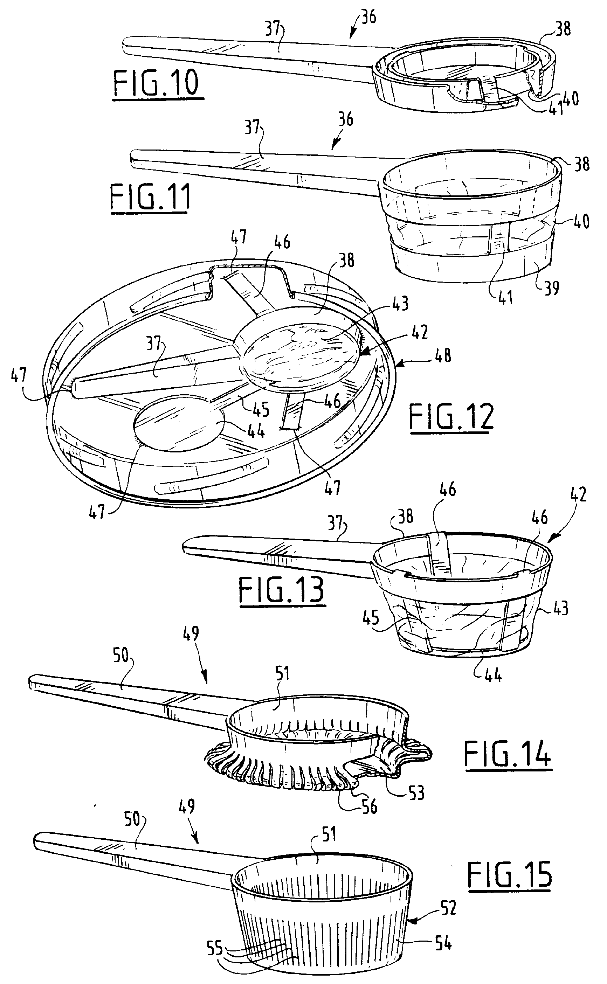

Figures 10 and 11 show a measuring spoon 36 with a handle 37 and carrier ring 38. The carrier ring 38 is connected to the scoop portion bottom 39 via a foil 40 and flexible strips 41, so that this concentric scoop portion bottom can be folded into the carrier ring 38.

The measuring spoon 42 shown in figures 12 and 13 comprises a sack-like foil 43 arranged on the carrier ring 38, and forming means which in this case consist of a scoop portion bottom 44 which is connected to the carrier ring 38 via a flexible strip of material 45. Two other forming strips 46 hold the scoop portion bottom 44 in the bottom of the foil 43 and thus form the scoop portion.

Figure 12 shows the measuring spoon 42 which is fixed in a cover 48 via adhesive points 47.

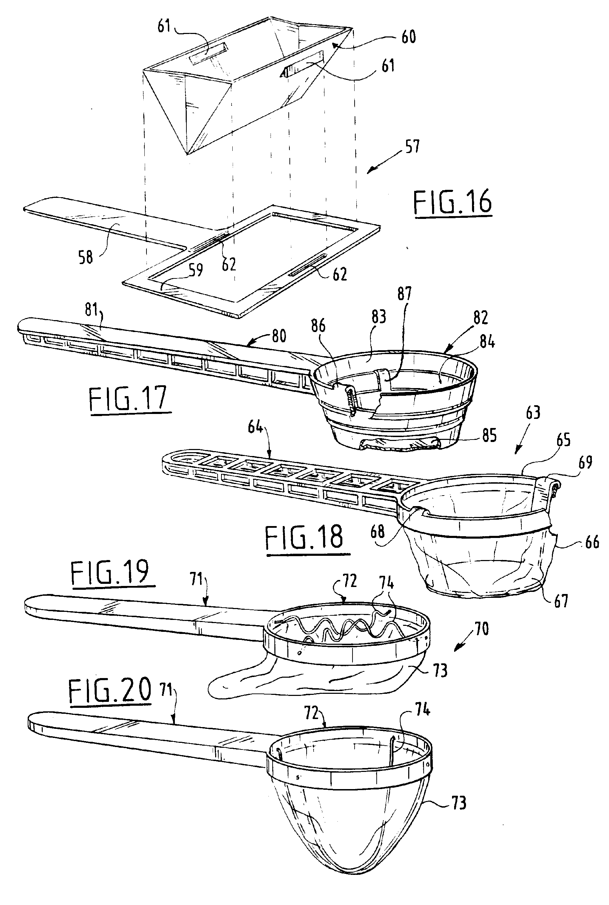

Figures 14 and 15 show a measuring spoon 49 with a handle 50 and a carrier ring 51 as well as a scoop portion 52 consisting of a bottom 53 and a peripheral wall 54, wherein a large number of slits 55 are arranged, whereby during folding flexible peripheral wall strips 56 result.

The measuring spoon 57 of figure 16 comprises a handle 58 and a rectangular carrier ring 59, wherein a separately folding scoop portion 60 can be arranged that hooks with protruding edges 61 into slots 62 of the carrier ring 59. The measuring spoon 57 is a measuring spoon which can easily be formed through folding by a consumer without much insight.

The measuring spoon 80 according to figure 17 comprises a handle 81 with a carrier ring 83 which, with an intermediate ring 84 and bottom ring 85 nesting therein, form the scoop portion 82. The carrier ring 83 is connected to the intermediate ring 84 via the flexible strip 86. The intermediate ring 84 is connected to the bottom ring 85 via the flexible strip 87.

The measuring spoon 63 from figure 18 comprises a handle 64 with a carrier ring 65, with a sack-like foil 66 which is held in a scoop portion form by a bottom 67 which is held at a distance from the carrier by way of the strips 68 and 69, whereof the strip 68 os connected to the carrier ring and the strip 69 is hookable thereon.

The measuring spoon 70 shown in figures 19 and 20 comprises a handle 71 and a carrier ring 72 which is again provided with a sack-like foil 73 which is held in a scoop portion form with wires of memory material which after heating with for instance hot water assume a bracket shape and tighten the foil into the scoop portion form.

Finally, figure 21 shows a measuring spoon 75 with a handle 76 and a carrier ring 77 whereto braided strips 78 and 79 are attached which are flexible and foldable inside the carrier ring 77.

## Claims

1. Flat-foldable measuring spoon (9,21,30,36,42,49,57,63,70,75,80) comprising a handle (10,37,50,58,64,71,75,76,81) and a spoon portion, whereby the spoon portion comprises a flat-foldable scoop portion (12,31,52,60,82) characterized in that the spoon portion further comprising a carrier ring (11,22,38,51,59,65,72,77,83) intended for accomodating the scoop portion (12,31,52,60,82).

2. Packaging (1,29) comprising a holder (2) with an opening (3) which is closable by a cover (6) and which is closed off with a removable tagger (4), characterized by a folded measuring spoon (9,21,30,36,42,49,57,63,70,75,80) according to claim 1 which resides in the space between the cover (6,48) and the tagger (4).

3. Packaging (1) as claimed in claim 2, wherein the handle (10) with the carrier ring (11) spans the opening (3) and supports via the tagger (4) on an opening edge (8).

4. Packaging (1,29) as claimed in claim 2 or 3, wherein the handle (10), the carrier ring (11) and the scoop portion (12,31) are manufactured from one piece.

5. Packaging (1) as claimed in claims 2-4, wherein the measuring spoon (9) is attached in the cover (19).

6. Packaging (1) as claimed in claim 5, wherein the cover (19) and the handle (10) with the carrier ring (11) are manufactured from one piece.

7. Packaging (1) as claimed in claim 6, wherein the cover (19) and the measuring spoon (9) are manufactured from one piece.

8. Packaging (1) as claimed in claims 2-7, wherein the scoop portion (12) is a circle segment-shaped strip of material (13) foldable to a cone.

9. Packaging (1) as claimed in claim 7, wherein a recess (14) is arranged in the strip of material (13) at the point of the centre point of the circle.

10. Packaging (1,29) as claimed in claim 8 or 9, wherein the strip of material (13) is connected to the carrier ring (11) via a flexible strip (18,23).

11. Packaging (1,29) as claimed in claims 8-10, wherein along the curved peripheral edge of the strip of material (13) at least one protruding edge portion (16,35) is arranged which is hookable behind the carrier ring (11) after forming of the strip of material (13) to a cone.

12. Packaging (1,29) as claimed in claims 2-7, wherein the scoop portion (12,31) comprises a scoop portion bottom (27;32) having peripheral wall parts (24,25;34) connected thereto via folding edges (26).

13. Packaging (1) as claimed in claim 12, wherein one peripheral wall part (24;34) is connected to the carrier ring (22;11).

14. Packaging (1) as claimed in claim 12 or 13, wherein at least one peripheral wall part (25) is provided with a protruding edge portion (28) hookable behind the carrier ring (22).

15. Packaging (1) as claimed in claim 13 or 14, wherein the peripheral wall parts (24,25) protrude radially in a star shape in the flat-folded form.

16. Packaging (29) as claimed in claims 2-7, wherein the scoop portion (82) comprises a bottom part (39,44,85) and optionally at least one intermediate clamp part (41,84), which can be mutually clamped via a peripheral edge during forming of the scoop portion (82).

17. Packaging (29) as claimed in claim 16, wherein the bottom (85), the intermediate clamp part (84) and the carrier ring (83) are mutually connected via flexible strips (86,87).

18. Packaging (1) as claimed in claims 2-7, wherein the scoop portion comprises a foil (40,43,66,73) attached to the carrier ring (38,72) and means for forming the foil (40,43,66,73) to the scoop portion (44).

19. Packaging (1) as claimed in claim 18, wherein the forming means comprise brackets of memory metal (74) fixed to the carrier ring (72).

20. Packaging (1) as claimed in claim 18, wherein the forming means comprise a scoop portion bottom (39,44,67) and at least one strip (41;45;46;68,69) coupling the scoop portion bottom (39,44) to the carrier ring (38).

21. Packaging (1) as claimed in claim 20, wherein the foil (43) is arranged between the carrier ring (38) and the scoop portion bottom (44) and the scoop portion bottom (44) can be taken up inside the carrier ring (38).

22. Packaging (1) as claimed in claims 2-7, wherein the scoop portion comprises braided strips (78,79) of material which are connected to the carrier ring (77).

23. Packaging (1) as claimed in claims 2-7, wherein the scoop portion (52) comprises a bottom (53) which is connected to the carrier ring (51) via a peripheral edge, wherein a large number of slits (55) are arranged lying transversely of the carrier ring (51), whereby flexible peripheral wall strips (56) are formed.

24. Cover (6,48) provided with a measuring spoon (9,42) as claimed in claim 1 intended for use in a packaging as claimed in claims 2-23.

## Patentansprüche

1. Flach zusammenlegbarer Meßlöffel (9, 21, 30, 36, 42, 49, 57, 63, 70, 75, 80) enthaltend einen Stiel (10, 37, 50, 58, 64, 71, 75 76, 81) und einen Löffelteil, wobei der Löffelteil einen flach zusammenlegbaren Kellenteil (12, 31, 52, 60, 82) enthält,
dadurch gekennzeichnet,
daß der Löffelteil ferner einen Trägerring (11, 22, 38, 51, 59, 65, 72, 77, 83) enthält, der zum Aufnehmen des Kellenteils (12, 31, 52, 60, 82) bestimmt ist.

2. Verpackung (1, 29) enthaltend einen Behälter (2) mit einer Öffnung (3), die durch einen Deckel (6) verschließbar ist und die mit einer enffernbaren Abdeckung (4) abgeschlossen ist,
gekennzeichnet durch
einen zusammengelegten Meßlöffel (9, 21, 30, 36, 42, 49, 57, 63, 70, 75, 80) gemäß Anspruch 1, der in dem Raum zwischen dem Deckel (6, 48) und der Abdeckung Abdeckung (4) liegt.

3. Verpackung (1) nach Anspruch 2,
dadurch gekennzeichnet,
daß der Stiel (10) mit dem Trägerring (11) die Öffnung (3) überspannt und sich über die Abdeckung (4) auf einer Öffnungskante (8) abstützt.

4. Verpackung (1, 29), nach Anspruch 2 oder 3
dadurch gekennzeichnet,
daß der Stiel (10), der Trägerring (11) und der Kellenteil (12, 31) aus einem Stück hergestellt sind.

5. Verpackung (1) nach einem der Ansprüche 2 - 4
dadurch gekennzeichnet,
daß der Meßlöffel (9) in dem Deckel (19) befestigt ist.

6. Verpackung (1) nach Anspruch 5,
dadurch gekennzeichnet,
daß der Deckel (19) und der Stiel (10) mit dem Trägerring (11) aus einem Stück hergestellt sind.

7. Verpackung (1) nach Anspruch 6,
dadurch gekennzeichnet,
daß der Deckel (19) und der Meßlöffel (9) aus einem Stück hergestellt sind.

8. Verpackung (1) nach den Ansprüchen 2 - 7,
dadurch gekennzeichnet,
daß der Kellenteil (12) ein kreissegmentförmiger Streifen aus Material (13) ist, das zu zu einem Kegel faltbar ist.

9. Verpackung (1) nach Anspruch 7,
dadurch gekennzeichnet,
daß eine Ausnehmung (14) in dem Streifen des Materials (13) am Ort des Mittelpunktes des Kreises angeordnet ist.

10. Verpackung (1, 29) nach Anspruch 8 oder 9,
dadurch gekennzeichnet,
daß der Streifen aus Material (13) mit dem Trägerring (11) über einen flexiblen Streifen (18, 23) verbunden ist.

11. Verpackung (1, 29) nach den Ansprüchen 8 - 10,
dadurch gekennzeichnet,
daß längs der gekrümmten Umfangskante des Streifens aus Material (13) wenigstens ein hervortretender Kantenteil (16, 35) angeordnet ist, der nach dem Formen des Streifens aus Material (13) zu einem Kegel hinter dem Trägerring (11) einhakbar ist.

12. Verpackung (1, 29) nach den Ansprüchen 2 - 7,
dadurch gekennzeichnet,
daß der Kellenteil (12, 31) einen Kellenteilboden (27; 32) mit Umfangswandabschnitten (24, 25; 34) enthält, die damit über Faltkanten (26) verbunden sind.

13. Verpackung (1) nach Anspruch 12,
dadurch gekennzeichnet,
daß ein Umfangswandabschnitt (24; 34) mit dem Trägerring (22; 11) verbunden ist.

14. Verpackung (1) nach Anspruch 12 oder 13,
dadurch gekennzeichnet,
daß wenigstens ein Umfangswandabschnitt (25) mit einem hervortretenden Kantenteil (28) versehen ist, das hinter dem Trägerring (22) einhakbar ist.

15. Verpackung (1), nach Anspruch 13 oder 14,
dadurch gekennzeichnet,
daß die Umfangswandabschnitte (24, 25) in der flach zusammengelegten Form radial in einer Sternform hervortreten.

16. Verpackung (29) nach den Ansprüchen 2 - 7,
dadurch gekennzeichnet,
daß der Kellenteil (82) ein Bodenteil (39, 44, 85) und optional wenigstens ein Zwischenbefestigungsteil (41, 84) enthält, die gegenseitig über eine Umfangskante während des Formens des Kellenteils (82) befestigt werden können.

17. Verpackung (29) nach Anspruch 16,
dadurch gekennzeichnet,
daß der Boden (85), der Zwischenbefestigungsteil (84) und der Trägerring (83) untereinander über flexible Streifen (86, 87) verbunden sind.

18. Verpackung (1) nach den Ansprüchen 2 - 7,
dadurch gekennzeichnet,
daß der Kellenteil eine Folie (40, 43, 66, 73), die an dem Trägerring (38, 72) befestigt ist, und Einrichtungen zum Formen der Folie (40, 43, 66, 73) zum Kellenteil (44) enthält.

19. Verpackung (1), nach Anspruch 18,
dadurch gekennzeichnet,
daß die Formgebungseinrichtungen Klammern aus Memorymetall (74) enthalten, die an dem Trägerring (72) befestigt sind.

20. Verpackung (1) nach Anspruch 18,
dadurch gekennzeichnet,
daß die Formgebungseinrichtungen einen Kellenteilboden (39, 44, 67) und wenigstens einen Streifen (41; 45; 46; 68, 69) enthalten, der den Kellenteilboden (39, 44) an den Trägerring (38) koppelt.

21. Verpackung (1), nach Anspruch 20,
dadurch gekennzeichnet,
daß die Folie (43) zwischen dem Trägerring (38) und dem Kellenteilboden (44) angeordnet ist und der Kellenteilboden (44) innerhalb des Trägerrings (38) aufgenommen werden kann.

22. Verpackung (1) nach den Ansprüchen 2 - 7,
dadurch gekennzeichnet,
daß der Kellenteil geflochtene Materialstreifen (78, 79) enthält, die mit dem Trägerring (77) verbunden sind.

23. Verpackung (1) nach den Ansprüchen 2 - 7,
dadurch gekennzeichnet,
daß der Kellenteil (52) einen Boden (53) enthält, der mit dem Trägerring (51) über eine Umfangskante verbunden ist, worin eine große Anzahl von Schlitzen (55) angeordnet sind, die schräg oder quer zum Trägerring (51) liegen, wodurch flexible Umfangswandstreifen (56) gebildet sind.

24. Deckel (6, 48), versehen mit einem Meßlöffel (9, 42), nach Anspruch 1, bestimmt zur Verwendung bei einer Verpackung, wie in den Ansprüchen 2 - 23 beansprucht.

## Revendications

1. Cuillère doseuse-pliable à plat (9, 21, 30, 36, 42, 49, 57, 63, 70, 75, 80) comprenant un manche (10, 37, 50, 58, 64, 71, 75, 76, 81) et une partie cuillère dans laquelle la partie cuillère est constituée par une partie cuillère pliable à plat (12, 31, 52, 60,82 ) caractérisée en ce que la partie cuillère comprend en outre un anneau support (11, 22, 38, 51, 59, 65, 72, 77, 83) destiné à recevoir la partie cuillère (12, 31, 52, 60, 82).

2. Emballage (1, 29) comprenant un contenant (2) avec une ouverture (3) qui peut être fermée par un couvercle (6) et qui est fermée par une capsule amovible (4), caractérisé par une cuillère-doseuse pliée (9,21,30, 36, 42, 49, 57, 63, 70, 75, 80) selon la revendication 1, qui se place dans l'espace situé entre le couvercle (6, 48) et la capsule (4).

3. Emballage (1) selon la revendication 2, dans lequel le manche (10) avec l'anneau support (11) est placé en travers de l'ouverture (3) et s'appuie par l'intermédiaire de la capsule (4) sur un bord d'ouverture (8).

4. Emballage (1, 29) selon la revendication 2 ou 3, dans lequel le manche (10), l'anneau support (11) et la partie cuillère (12, 31) sont fabriqués en une seule pièce.

5. Emballage (1) selon les revendications 2 à 4, dans lequel la cuillère-doseuse (9) est solidaire du couvercle (19).

6. Emballage (1) selon la revendication 5, dans lequel le couvercle (19) et le manche (10) avec l'anneau support (11) sont fabriqués en une seule pièce.

7. Emballage (1) selon la revendication 6, dans lequel le couvercle (19) et la cuillère-doseuse (9) sont fabriqués en une seule pièce.

8. Emballage (1) selon les revendications 2 à 7, dans lequel la partie cuillère (12) est une bande en forme de cercle segmentée en matériau (13) pliable en un cône.

9. Emballage (1) selon la revendication 7, dans lequel un évidement (14) est formé dans la bande de matériau (13) à l'endroit du centre du cercle.

10. Emballage (1, 29) selon la revendication 8 ou 9, dans lequel la bande de matériau (13) est reliée à l'anneau support (11) par une languette souple (18, 23).

11. Emballage (1, 29) selon les revendications 8 à 10, dans lequel le long du bord périphérique courbe de la bande de matériau (13) au moins une partie (16, 35) de bord en saillie est prévue pour s'accrocher derrière l'anneau support (11) lorsque la bande de matériau (13) a été mise en forme de cône.

12. Emballage (1, 29) selon les revendications 2 à 7, dans lequel la partie cuillère (12, 31) comprend un fond (27 ; 32) de partie cuillère ayant des parties (24, 25 ; 34) de paroi périphérique reliées à ce fond par des bords pliants (26).

13. Emballage (1) selon la revendication 12, dans lequel la partie ( 254; 34) de paroi périphérique est reliée à l'anneau support (22 ; 11).

14. Emballage (1) selon la revendication 12 ou 13, dans lequel une partie (25) au moins de paroi périphérique est formée avec une partie (28) de bord en saillie pour s'accrocher derrière l'anneau support (22).

15. Emballage (1) selon la revendication 13 ou 14, dans lequel les parties (24, 25) de paroi périphérique font saillie dans la direction radiale pour former une étoile dans la forme pliée à plat.

16. Emballage (29) selon les revendications 2 à 7, dans lequel la partie cuillère (82) comprend une partie de fond (39, 44, 85) et, en option, au moins une partie (41, 84) d'accrochage intermédiaire, qui peuvent être accrochées mutuellement au moyen d'un bord périphérique pendant la formation de la partie cuillère (82).

17. Emballage (29) selon la revendication 16, dans lequel le fond (85), la partie (84) d'accrochage intermédiaire et l'anneau support (83) sont mutuellement reliés par des languettes souples (86, 87).

18. Emballage (1) selon les revendications 2 à 7, dans lequel la partie cuillère comprend une feuille (40, 43, 66, 73) fixée sur l'anneau support (38, 72) et des moyens pour donner à la feuille (40, 43, 66, 73) la forme d'une partie cuillère (44).

19. Emballage (1) selon la revendication 18, dans lequel les moyens de mise en forme comprennent des crochets (74) en métal à mémoire fixés à l'anneau support (72).

20. Emballage selon la revendication 18, dans lequel les moyens de mise en forme comprennent un fond (39, 44, 67) de partie cuillère et au moins une languette (41 ; 45; 46 ; 68, 69) accouplant le fond (39, 44) de la partie cuillère à l'anneau support (38)

21. Emballage selon la revendication 20, dans lequel la feuille (43) est disposée entre l'anneau support (38) et le fond (44) de la partie cuillère et le fond (44) de la partie cuillère peut être remonté à l'intérieur de l'anneau support (38).

22. Emballage (1) selon les revendications 2 à 7, dans lequel la partie cuillère est formée de bandes tressées (78, 79) en matériau qui sont reliées à l'anneau support (77).

23. Emballage (1) selon les revendications 2 à 7, dans lequel la partie cuillère (52) comprend un fond (53) qui est relié à l'anneau support (51) par un bord périphérique, dans lequel un grand nombre de fentes (55) sont pratiquées dans la direction transversale de l'anneau support (51) de façon à former des bandes souples (56) de paroi périphérique.

24. Couvercle (6, 48) prévu pour une cuillère-doseuse (9, 42) selon la revendication 1, destiné à être utilisé dans un emballage selon les revendications 2 à 23.
